# FASCICULE DE BREVET EUROPEEN

(11) **EP 2 299 252 B1**
(45) Date de publication et mention de la délivrance du brevet: **05.06.2013**
(21) Numéro de dépôt: 10177253.1
(22) Date de dépôt: 17.09.2010
(51) Int. Cl.: G01L 5/16, G01L 5/22

(54) **Dispositif de mesure embarqué sur un cycle pour la mesure d'efforts et cycle équipé d'un tel dispositif de mesure**
Vorrichtung an Bord eines Fahrrads zur Messung von Kräfte und Fahrrad mit einer derartigen Vorrichtung
Bicyle-mounted apparatus for measuring forces and bicycle with the same

(30) Priorité: 22.09.2009 FR 0956518
(43) Date de publication de la demande: 23.03.2011
(73) Titulaire: Look Cycle International, 58000 Nevers (FR)
(72) Inventeur: Roudergues, Frédéric, PARIS, 75116 (FR); Bouchez, Julien, 13009 Marseille (FR)
(74) Mandataire: Laget, Jean-Loup

(56) Documents cités:
- EP-A2- 1 978 342
- WO-A1-2010/014242
- WO-A2-2008/109914
- DE-A1- 10 007 841
- DE-U1- 29 507 357
- DE-U1- 29 611 344
- DE-U1- 29 810 641

## Description

La présente invention concerne un dispositif de mesure embarqué sur un cycle pour la mesure d'efforts développés par un cycliste lors du pédalage. Il concerne également un cycle équipé d'un dispositif de mesure selon l'invention.

On connaît un grand nombre de dispositifs de mesure différents destinés à mesurer l'effort développé par un cycliste sur une pédale de cycle. Ces dispositifs utilisent des capteurs de types différents tels que les extensomètres formés par des jauges de contraintes appliqués sur des éléments du cycle tel que les roues, les manivelles du pédalier, l'axe de pédalier et les axes de pédale.

La demanderesse a par ailleurs développée une pédale de cycle dynamométrique décrite dans le brevet FR2878328. Dans cette pédale, des jauges de déformation sont utilisées pour mesurer les trois composantes des forces appliquées sur la pédale, c'est-à-dire longitudinales, transversales et verticales. Cependant, cette pédale est très complexe et peu adaptée à une utilisation grand public. Elle convient plutôt pour une utilisation en laboratoire.

Il existe également des moyens de mesure optique qui mesurent le différentiel de déformation entre deux sections équipées d'un disque optique respectif.

Dans tous les cas, les signaux fournis par les capteurs doivent ensuite être transmis à des moyens électroniques de traitement de signaux pour être traités et convertis en signaux pouvant être utilisés par un dispositif d'affichage pour montrer les valeurs des efforts détectés.

L'invention se rapporte en particulier aux dispositifs dans lesquels des capteurs d'effort sont disposés sur l'axe de pédale comme par exemple dans les brevets DE 100 07 841 A1, DE 298 10 641 U1, DE 296 11 344 U1 et DE 295 07 357 U1. Dans ce domaine précis, on connaît un dispositif de mesure de ce genre, mais il ne permet pas une utilisation sur un pédalier classique. Plus précisément, il est même nécessaire de changer les manivelles qui sont spécifiques. Il s'agit en outre d'un dispositif monté sur un cycle stationnaire et les informations sont analysées et affichées sur un ordinateur. Les composants sont lourds et coûteux et ce dispositif est uniquement utilisé à des fins médicales.

Par ailleurs, dans grand nombre des dispositifs connus, il n'y a aucune dissociation des deux pieds du cycliste et non plus du rapport traction/propulsion lors du pédalage.

En outre, la demande de brevet WO 2010/014242, qui bénéficie d'une date antérieure à la date de priorité de la présente demande mais qui n'a été publiée que postérieurement à cette date, décrit un dispositif de mesure embarqué du genre décrit dans le préambule de la revendication 1. Cependant, ce dispositif n'est pas adapté pour être monté et démonté fréquemment sur une manivelle de pédalier et ne permet pas une utilisation aisée du dispositif de mesure sur des cycles différents.

Le but de l'invention est de remédier aux inconvénients des dispositifs de mesure connus en proposant un dispositif de mesure embarqué sur un cycle pour la mesure d'efforts qui permet au cycliste d'utiliser son pédalier d'origine. Le dispositif selon l'invention est simple, léger et peut très facilement être monté et démonté, aussi pour être utilisé sur des cycles différents du cycliste qui aura le sentiment de se trouver sur son cycle habituel et de rouler avec des pédales normales.

Le dispositif de mesure selon l'invention permet en outre une mesure de puissance différentiée des pieds droit et gauche.

L'objet de l'invention est un dispositif de mesure embarqué pour la mesure d'efforts développés par un cycliste sur une pédale de cycle montée rotative sur un axe de pédale fixé dans un trou de fixation à l'extrémité libre d'une manivelle de pédalier, comportant des capteurs d'effort disposés sur l'axe de pédale et aptes à détecter au moins l'effort dirigé perpendiculairement à l'axe de pédale et à fournir un signal fonction de l'effort détecté, et des moyens électroniques recevant les signaux des capteurs en vue de l'obtention de valeurs affichables, au moins une partie desdits moyens électroniques étant intégrés dans une carte électronique alimentée par une source d'énergie autonome et sur laquelle est fixé un organe de connexion mâle apte à traverser ledit trou de fixation de l'axe de pédale sur la manivelle afin de coopérer avec un organe de connexion femelle prévu dans l'extrémité de l'axe de pédale fixée sur la manivelle, caractérisé par le fait que ladite carte électronique forme avec ledit organe de connexion mâle un ensemble facilement détachable et par le fait que ledit organe de connexion mâle est retenu dans ledit organe de connexion femelle par des moyens de contact électrique prévus dans lesdits organes de connexion mâle et femelle et enfichables les uns dans les autres.

Selon d'autres caractéristiques de l'invention :
- ledit organe de connexion mâle s'étend perpendiculairement à ladite carte électronique de sorte que ladite carte électronique s'étende parallèlement à la manivelle à proximité de celle-ci lorsque ledit organe de connexion mâle coopère avec ledit organe de connexion femelle;
- lesdits capteurs d'effort sont des jauges de contrainte et la position angulaire de l'axe de pédale fixé sur la manivelle peut être réglée et bloquée à l'aide d'un contre-écrou coopérant avec un filetage prévu sur l'axe de pédale en venant en appui contre la manivelle de sorte que deux surfaces opposées de l'axe de pédale sur lesquelles sont fixées lesdits jauges de contrainte s'étendent dans un plan coïncidant sensiblement avec l'axe longitudinal de la manivelle;
- la position angulaire relative desdits organes de connexion mâle et femelle est déterminée à l'aide d'un détrompeur prévu sur ceux-ci;
- ledit détrompeur comporte une rainure axiale prévue sur la face intérieure dudit organe de connexion femelle et apte à coopérer avec une nervure axiale prévue sur la face extérieure dudit organe de connexion mâle, ou inversement;
- deux détrompeurs sont disposés diamétralement opposés de manière à permettre une rotation relative desdits organes de connexion mâle et femelle de 180°;
- le dispositif comprend en outre un capteur de la vitesse angulaire de la manivelle comprenant une première partie intégrée dans le corps de pédale et une deuxième partie intégrée dans l'axe de pédale, ledit capteur de vitesse étant apte à générer un signal fonction de la vitesse angulaire détectée pour le fournir auxdits moyens de traitement de signaux;
- ladite source d'énergie est une batterie intégrée dans la carte électronique;
- ladite carte électronique comporte en outre un émetteur apte à émettre des données de la mesure vers un dispositif d'affichage;
- ledit dispositif d'affichage est un dispositif d'affichage embarqué montrant au cycliste en temps réel les efforts développés; et
- ladite carte électronique comporte en outre une mémoire pour le stockage de données obtenues à partir des signaux émis par les capteurs.

L'invention se rapporte également un cycle équipé d'un dispositif de mesure présentant ces caractéristiques.

D'autres caractéristiques et avantages de l'invention ressortiront de la description qui va suivre d'un mode de réalisation non limitatif de l'invention, en référence aux figures annexées dans lesquelles :
- la figure 1 est une vue éclatée en perspective montrant les pièces du dispositif selon l'invention avant assemblage;
- la figure 2 est une vue en perspective montrant l'axe de pédale pourvu d'un organe de connexion femelle, et un organe de connexion mâle devant y être reçu;
- la figure 3 est une vue en perspective d'un axe de pédale illustrant l'emplacement de capteurs d'effort sur celui-ci, ainsi que l'emplacement de certains moyens électroniques également placés sur l'axe de pédale;
- la figure 4 est une vue partielle en perspective illustrant l'emplacement des deux parties d'un capteur de la vitesse angulaire de la manivelle;
- la figure 5 est une vue en perspective montrant l'axe de pédale assemblé à la manivelle;
- la figure 6 est une vue en coupe axiale montrant la partie du corps de pédale qui est fixé à l'axe de pédale qui à son tour est fixé d'un côté de la manivelle et la carte électronique selon l'invention à l'autre côte de celle-ci;
- la figure 7 est une vue en perspective illustrant tout l'ensemble selon l'invention après assemblage avec la carte électronique et prêt à être utilisé; et
- la figure 8 est une vue en perspective ressemblant à celle de la figure 7, mais sans la carte électronique et avec un bouchon à sa place.

Dans les figures, les éléments identiques ou équivalents porteront les mêmes signes de référence.

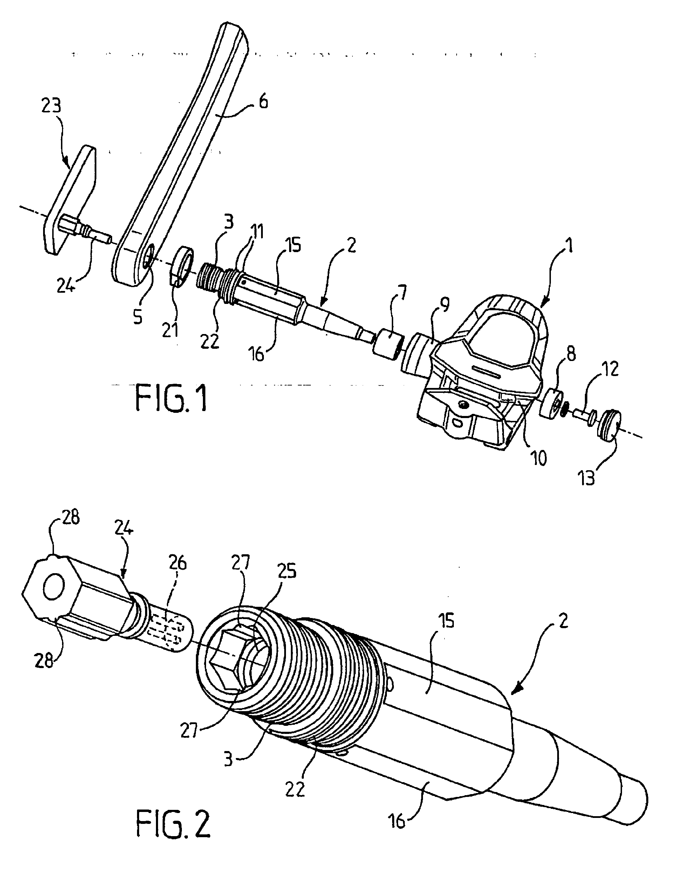

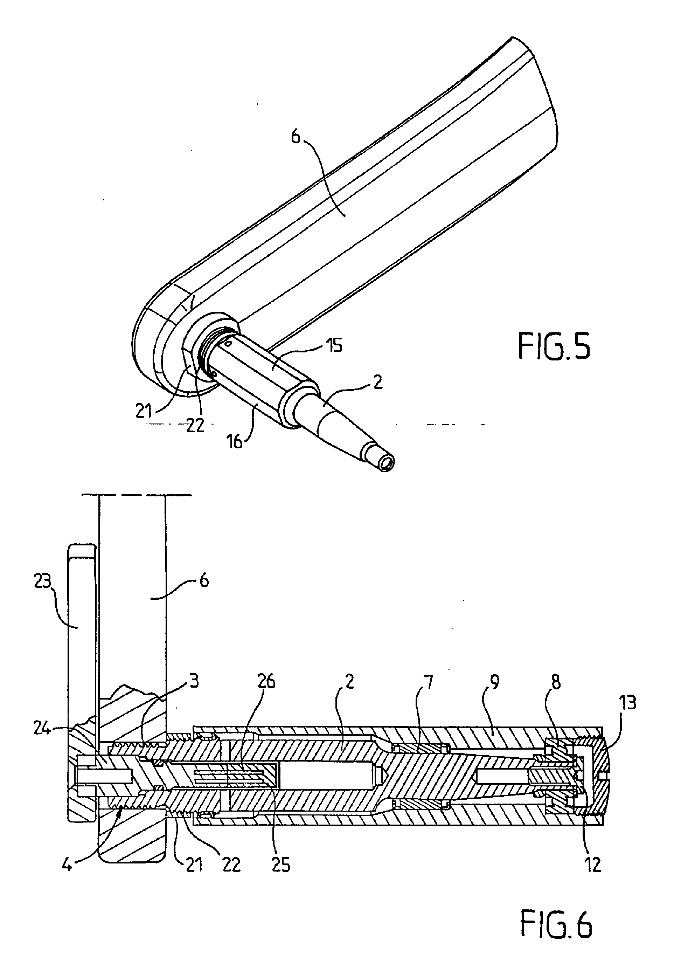

La figure 1 montre une pédale 1 du genre automatique qui est bien connue dans l'état de la technique et qui ne sera pas décrite en détail. La pédale 1 est destinée à être montée sur un axe de pédale 2 qui à l'une de ses extrémités est pourvu d'un filetage 3 adapté pour coopérer avec un taraudage 4 (voir figure 6) prévu dans un trou traversant de fixation 5 à l'extrémité libre d'une manivelle de pédalier 6. L'autre manivelle n'est pas montrée sur les figures, mais elle est identique à celle montrée, alors qu'elle s'étend dans le sens opposé. Le pédalier en entier n'est pas non plus montré puisqu'il ne se rapporte pas à l'invention.

La pédale 1 est de manière classique montée rotative sur l'axe de pédale 2 à l'aide d'une douille à aiguilles 7 et d'un roulement 8 disposés entre une partie transversale creuse 9 du corps de pédale 10 (voir aussi figure 6) formant un logement destiné à recevoir l'axe de pédale 2.

De manière habituelle, des joints d'étanchéité 11 sont enfilés sur l'axe de pédale du côté de la manivelle 6 et finalement, une vis 12 est vissée dans un taraudage prévu à l'extrémité correspondante de l'axe de pédale 2 pour limiter le mouvement longitudinal de la pédale 1 sur celui-ci. Un bouchon 13 est disposé à l'extérieur de la vis pour fermer l'extrémité de la partie transversale creuse 9 du corps de pédale 10.

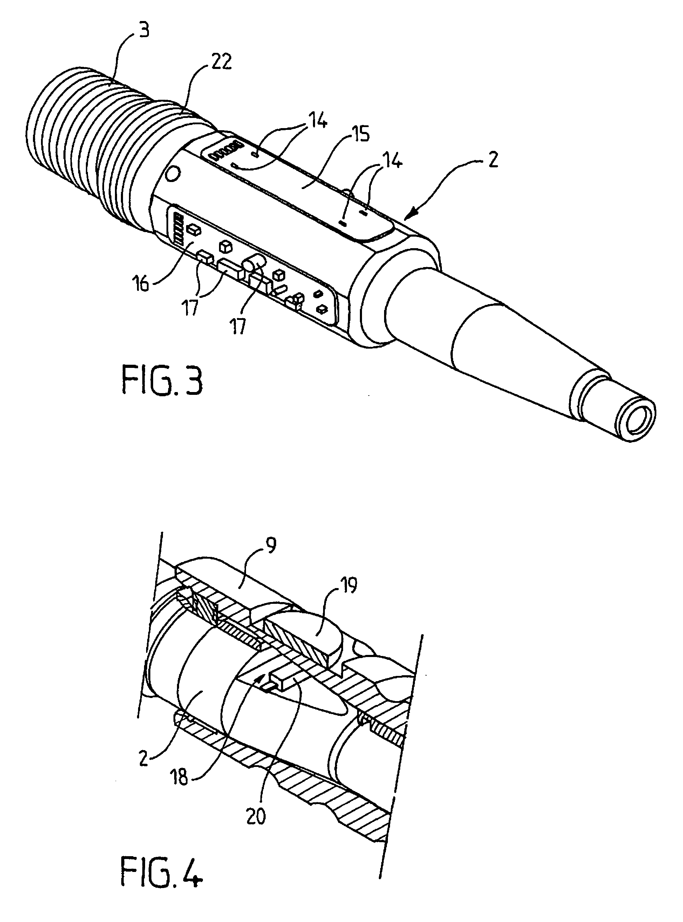

Des capteurs d'effort 14 (voir figure 3) qui dans l'exemple illustré sont constitués par des jauges de contrainte sont disposés sur une surface plane 15 de l'axe de pédale 2. Le même nombre de capteurs d'effort 14 est disposé sur une surface plane diamétralement opposée (non représentée) à la surface plane 15.

Décalée de 90° par rapport à la surface plane 15 se trouve une autre surface plane 16 qui porte des moyens électroniques 17 destinés à effectuer un traitement préliminaire des signaux issus des capteurs 14. Une autre surface plane (non représentée) est disposée diamétralement opposée à la surface plane 16 et porte également des moyens électroniques de traitement de signaux.

La figure 4 montre un capteur de vitesse angulaire 18 détectant la rotation de la manivelle 6. Ce capteur de vitesse angulaire comporte une première partie 19 intégrée dans la partie transversale creuse 9 du corps de pédale et une deuxième partie 20 intégrée dans l'axe de pédale 2. La première partie 19 est constitué par un aimant tournant autour de la deuxième partie qui constitue le capteur proprement dit qui est apte à générer un signal fonction de la vitesse angulaire détectée pour le fournir auxdits moyens de traitement de signaux 17.

L'axe muni de ses capteurs 14, 18 doit présenter une position bien définie par rapport à la manivelle 6. Dans ce but, la position angulaire de l'axe de pédale 2 sur la manivelle 6 peut être réglée et bloquée à l'aide d'un contre-écrou 21 coopérant avec un deuxième filetage 22 prévu sur l'axe de pédale 2. Cette position angulaire peut ainsi être réglée de sorte que les deux surfaces opposées de l'axe de pédale sur lesquelles sont fixées les capteurs d'effort 14 s'étendent dans un plan qui coïncide sensiblement avec l'axe longitudinal de la manivelle.

Le dispositif de mesure selon l'invention comporte en outre une carte électronique 23 dans laquelle au moins une partie des moyens électroniques du dispositif sont intégrés. La carte électronique 23 est alimentée par une source d'énergie autonome (non représentée) qui par exemple est constituée par une batterie (non représentée), de préférence rechargeable, intégrée dans la carte.

Un organe de connexion mâle 24 est fixé sur la carte électronique 23 pour traverser le trou de fixation 5 de l'axe de pédale 2 sur la manivelle 6 afin de coopérer avec un organe de connexion femelle 25 prévu dans l'extrémité de l'axe de pédale 2 fixée sur la manivelle 6. Des moyens de contact électrique 26 sont prévus dans les organes de connexion mâle et femelle 24, 25 pour assurer la liaison entre la carte électronique et le reste du circuit électrique comprenant les moyens électroniques de prétraitement des signaux fournis par les capteurs 14, 18.

L'organe de connexion mâle 24 s'étend perpendiculairement à la carte électronique 23 de sorte que celle-ci s'étende parallèlement à la manivelle 6 à proximité de celle-ci lorsque l'organe de connexion mâle coopère avec l'organe de connexion femelle 25.

Bien entendu, la carte électronique pourrait être directement reliée aux capteurs et contenir l'ensemble des moyens électroniques nécessaires au traitement des signaux fournis par les capteurs 14, 18.

Par ailleurs, les moyens de contact électrique 26 sont enfichables les uns dans les autres pour retenir l'organe de connexion mâle 24 dans l'organe de connexion femelle 25. Comme il n'y a pratiquement aucune force agissant longitudinalement pour séparer les deux organes de connexion 24, 25, aucun encliquetage ou vissage n'est nécessaire.

La carte électronique 23 forme ainsi avec l'organe de connexion mâle 24 un ensemble qui peut facilement être monté et démonté par simple traction sans avoir recours à un outil, par exemple pour être monté sur un autre cycle ou bien pour protéger la carte quand elle n'est pas utilisée ou bien pour recharger la batterie de la carte.

Dans une équivalence technique non illustrée sur les dessins, on met en oeuvre une disposition inversée des organes de connexion mâle et femelle, c'est-à-dire que l'organe de connexion mâle constitue un prolongement de l'axe de pédale pour s'étendre à travers le trou de fixation 5 de la manivelle 6 pour coopérer avec un organe de connexion femelle effectué dans la carte électronique 23.

La position angulaire relative des organes de connexion mâle et femelle 24, 25 est déterminée à l'aide d'un détrompeur prévu sur ceux-ci. Ce détrompeur comporte une rainure axiale 27 prévue sur la face intérieure de l'organe de connexion femelle 25 et apte à coopérer avec une nervure axiale 28 prévue sur la face extérieure de l'organe de connexion mâle, ou inversement.

Dans l'exemple illustré, deux détrompeurs 27, 28 sont disposés diamétralement opposés de manière à permettre une déplacement relative desdits organes de connexion mâle et femelle de 180°.

Egalement dans l'exemple illustré, l'extrémité de l'organe de connexion mâle 24 fixée sur la carte électronique 21 est hexagonale pour être reçue dans le creux à l'extrémité de l'axe de pédale 2 qui présente une forme hexagonale complémentaire.

La carte électronique 23 comporte avantageusement en outre un émetteur (non représenté) apte à émettre des données de la mesure vers un dispositif d'affichage (non représenté).

De préférence, le dispositif d'affichage est un dispositif d'affichage embarqué permettant au cycliste d'être informé en temps réel des efforts qu'il développe lors du pédalage.

Finalement, la carte électronique peut en outre comporter une mémoire (non représentée) pour le stockage des données obtenues à partir des signaux émis par les capteurs 14, 18.

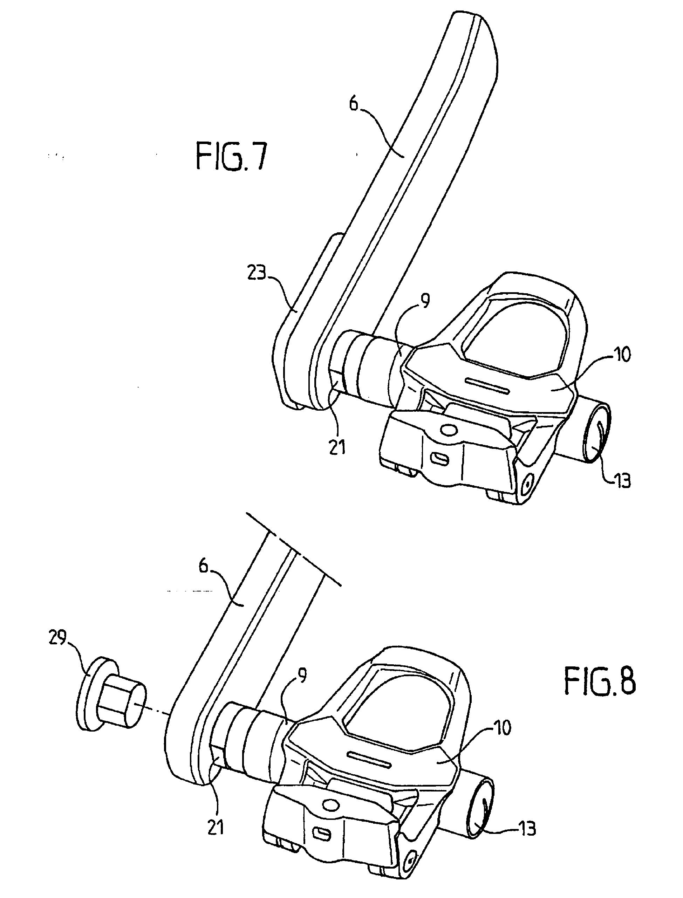

Lorsque l'ensemble carte électronique - organe de connexion mâle est enlevé temporairement, par exemple pour le lavage du cycle ou pour le protéger lors de son non utilisation, le trou formé par l'organe de connexion femelle 25 est avantageusement fermé par un bouchon 29 adapté à la forme intérieur de cet organe comme cela est montré sur la figure 8.

Le dispositif selon l'invention présente aussi l'avantage que la détection et l'analyse des efforts dirigés vers les deux pédales sont entièrement dissociées, ainsi que la répartition des efforts traction-propulsion.

Bien entendu, l'invention n'est pas limitée à l'exemple illustré et décrit, mais peut faire l'objet de beaucoup de variantes à la portée de l'homme du métier sans pour autant sortir du cadre de invention telle que revendiquée.

## Revendications

1. Dispositif de mesure embarqué pour la mesure d'efforts développés par un cycliste sur une pédale de cycle (1) montée rotative sur un axe de pédale (2) fixé dans un trou de fixation (5) à l'extrémité libre d'une manivelle de pédalier (6), comportant des capteurs d'effort (14) disposés sur l'axe de pédale (2) et aptes à détecter au moins l'effort dirigé perpendiculairement à l'axe de pédale et à fournir un signal fonction de l'effort détecté, et des moyens électroniques (17) recevant les signaux des capteurs (14) en vue de l'obtention de valeurs affichables, au moins une partie desdits moyens électroniques (17) étant intégrés dans une carte électronique (23) alimentée par une source d'énergie autonome et sur laquelle est fixé un organe de connexion mâle (24) apte à traverser ledit trou de fixation (5) de l'axe de pédale (2) sur la manivelle (6) afin de coopérer avec un organe de connexion femelle (25) prévu dans l'extrémité de l'axe de pédale (2) fixée sur la manivelle (6), **caractérisé par le fait que** ladite carte électronique (23) forme avec ledit organe de connexion mâle (24) un ensemble facilement détachable et **par le fait que** ledit organe de connexion mâle (24) est retenu dans ledit organe de connexion femelle (25) par des moyens de contact électrique (26) prévus dans lesdits organes de connexion mâle et femelle (24, 25) et enfichables les uns dans les autres.

2. Dispositif de mesure d'efforts selon la revendication 1, **caractérisé par le fait que** ledit organe de connexion mâle (24) s'étend perpendiculairement à ladite carte électronique (23) de sorte que ladite carte électronique s'étende parallèlement à la manivelle (6) à proximité de celle-ci lorsque ledit organe de connexion mâle (24) coopère avec ledit organe de connexion femelle (25).

3. Dispositif de mesure d'efforts selon l'une quelconque des revendications précédentes et dans lequel lesdits capteurs d'effort (14) sont des jauges de contrainte, **caractérisé par le fait que** la position angulaire de l'axe de pédale (2) fixé sur la manivelle (6) peut être réglée et bloquée à l'aide d'un contre-écrou (21) coopérant avec un filetage (22) prévu sur l'axe de pédale (2) en venant en appui contre la manivelle (6) de sorte que deux surfaces opposées (15) de l'axe de pédale (2) sur lesquelles sont fixées lesdits jauges de contrainte (14) s'étendent dans un plan coïncidant sensiblement avec l'axe longitudinal de la manivelle (6).

4. Dispositif de mesure d'efforts selon l'une quelconque des revendications précédentes, **caractérisé par le fait que** la position angulaire relative desdits organes de connexion mâle et femelle (24, 25) est déterminée à l'aide d'un détrompeur (27, 28) prévu sur ceux-ci.

5. Dispositif de mesure d'efforts selon la revendication 4, **caractérisé par le fait que** ledit détrompeur comporte une rainure axiale (27) prévue sur la face intérieure dudit organe de connexion femelle (25) et apte à coopérer avec une nervure axiale (28) prévue sur la face extérieure dudit organe de connexion mâle (24), ou inversement.

6. Dispositif de mesure d'efforts selon la revendication 5, **caractérisé par le fait que** deux détrompeurs (27, 28) sont disposés diamétralement opposés de manière à permettre une rotation relative desdits organes de connexion mâle et femelle (24, 25) de 180°.

7. Dispositif de mesure d'efforts selon l'une quelconque des revendications précédentes, **caractérisé par le fait qu'**il comprend en outre un capteur de la vitesse angulaire (18) de la manivelle (6) comprenant une première partie (19) intégrée dans le corps de pédale (10) et une deuxième partie (20) intégrée dans l'axe de pédale (2), ledit capteur de vitesse étant apte à générer un signal fonction de la vitesse angulaire détectée pour le fournir auxdits moyens de traitement de signaux (17).

8. Dispositif de mesure d'efforts selon l'une quelconque des revendications précédentes, **caractérisé par le fait que** ladite source d'énergie est une batterie intégrée dans la carte électronique (23).

9. Dispositif de mesure d'efforts selon l'une quelconque des revendications précédentes, **caractérisé par le fait que** ladite carte électronique (23) comporte en outre un émetteur apte à émettre des données de la mesure vers un dispositif d'affichage.

10. Dispositif de mesure d'efforts selon la revendication 9 **caractérisé par le fait que** ledit dispositif d'affichage est un dispositif d'affichage embarqué montrant au cycliste en temps réel les efforts développés.

11. Dispositif de mesure d'efforts selon l'une quelconque des revendications précédentes, **caractérisé par le fait que** ladite carte électronique (23) comporte en outre une mémoire pour le stockage de données obtenues à partir des signaux émis par les capteurs (14, 18).

12. Cycle équipé d'un dispositif de mesure selon l'une quelconque des revendications 1 à 11.

## Patentansprüche

1. On-Board-Messvorrichtung zum Messen von Kräften, die von einem Radfahrer auf ein Fahrradpedal (1) ausgeübt werden, das rotierend auf einer Pedalwelle (2) montiert ist, die in einer Befestigungsöffnung (5) am freien Ende einer Tretlagerkurbel (6) befestigt ist, die Kraftsensoren (14) aufweist, die auf der Pedalwelle (2) angeordnet sind und imstande, mindestens die Kraft zu ermitteln, die senkrecht zur Pedalwelle gerichtet ist und ein Signal zu liefern, das Funktion der ermittelten Kraft ist, und elektronische Mittel (17), die die Signale der Sensoren (14) empfangen, um anzeigbare Werte zu erhalten, wobei mindestens ein Teil der elektronischen Mittel (17) in einer elektronischen Karte (23) integriert ist, die von einer autonomen Energiequelle versorgt wird und auf der ein männliches Anschlussorgan (24) befestigt ist, das imstande ist, die Befestigungsöffnung (5) der Pedalwelle (2) auf der Kurbel (6) zu durchqueren, um mit einem weiblichen Anschlussorgan (25) zusammenzuarbeiten, das im Ende der Pedalwelle (2) vorgesehen ist, das auf der Kurbel (6) befestigt ist, **dadurch gekennzeichnet, dass** die elektronische Karte (23) mit dem männlichen Anschlussorgan (24) eine leicht lösbare Gruppe bildet, und dadurch, dass das männliche Anschlussorgan (24) im weiblichen Anschlussorgan (25) durch elektrische Kontaktmittel (26) gehalten wird, die in dem männlichen und weiblichen Anschlussorgan (24, 25) vorgesehen sind und ineinander einsteckbar sind.

2. Vorrichtung zum Messen von Kräften nach Anspruch 1, **dadurch gekennzeichnet, dass** sich das männliche Anschlussorgan (24) senkrecht zur elektronischen Karte (23) derart erstreckt, dass sich die elektronische Karte parallel zur Kurbel (6) in der Nähe derselben erstreckt, wenn das männliche Anschlussorgan (24) mit dem weiblichen Anschlussorgan (25) zusammenarbeitet.

3. Vorrichtung zum Messen von Kräften nach einem der vorangehenden Ansprüche und wobei die Kraftsensoren (14) Dehnungsmesser sind, **dadurch gekennzeichnet, dass** die Winkelposition der auf der Kurbel (6) befestigten Pedalwelle (2) mit Hilfe einer Gegenmutter (21) einstellbar und blockierbar ist, die mit einem Gewinde (22) zusammenarbeitet, das auf der Pedalwelle (2) vorgesehen ist, durch Abstützung auf der Kurbel (6) derart, dass sich zwei gegenüberliegende Flächen (15) der Pedalwelle (2), auf denen die Dehnungsmesser (14) befestigt sind, in einer Ebene erstrecken, die etwa mit der Längsachse der Kurbel (6) zusammenfällt.

4. Vorrichtung zum Messen von Kräften nach einem der vorangehenden Ansprüche, **dadurch gekennzeichnet, dass** relative Winkelposition des männlichen und weiblichen Anschlussorgans (24, 25) mit Hilfe eines Unverwechselbarkeitsmittels (27, 28) bestimmt wird, der auf diesen vorgesehen ist.

5. Vorrichtung zum Messen von Kräften nach Anspruch 4, **dadurch gekennzeichnet, dass** das Unverwechselbarkeitsmittel eine axiale Rille (27) aufweist, die auf der Innenseite des weiblichen Anschlussorgans (25) vorgesehen ist und imstande, mit einer axialen Rippe (28) zusammenzuarbeiten, die auf der Außenseite des männlichen Anschlussorgans (24) vorgesehen ist, oder umgekehrt.

6. Vorrichtung zum Messen von Kräften nach Anspruch 5, **dadurch gekennzeichnet, dass** zwei Unverwechselbarkeitsmittel (27, 28) diametral gegenüberliegend angeordnet sind, um eine relative Rotation des männlichen und weiblichen Anschlussorgans (24, 25) um 180° zu erlauben.

7. Vorrichtung zum Messen von Kräften nach einem der vorangehenden Ansprüche, **dadurch gekennzeichnet, dass** sie ferner einen Sensor der Winkelgeschwindigkeit (18) der Kurbel (6) umfasst, der einen ersten Abschnitt (19), in den Pedalkörper (10) integriert ist, und einen zweiten Abschnitt (20), der in die Pedalwelle (2) integriert ist, umfasst, wobei der Geschwindigkeitssensor imstande ist, ein Signal zu erzeugen, das Funktion der ermittelten Winkelgeschwindigkeit ist, um es an die Signalverarbeitungsmittel (17) zu liefern.

8. Vorrichtung zum Messen von Kräften nach einem der vorangehenden Ansprüche, **dadurch gekennzeichnet, dass** die Energiequelle eine in die elektronische Karte (23) integrierte Batterie ist.

9. Vorrichtung zum Messen von Kräften nach einem der vorangehenden Ansprüche, **dadurch gekennzeichnet, dass** die elektronische Karte (23) ferner einen Sender aufweist, der imstande ist, Messdaten an eine Anzeigevorrichtung zu senden.

10. Vorrichtung zum Messen von Kräften nach Anspruch 9, **dadurch gekennzeichnet, dass** die Anzeigevorrichtung eine On-Board-Anzeigevorrichtung ist, die dem Radfahrer in Echtzeit die entwickelten Kräfte anzeigt.

11. Vorrichtung zum Messen von Kräften nach einem der vorangehenden Ansprüche, **dadurch gekennzeichnet, dass** die elektronische Karte (23) ferner einen Speicher zum Speichern der Daten aufweist, die von den Signalen erhalten werden, die von den Sensoren (14, 18) gesendet werden.

12. Fahrrad, das mit einer Messvorrichtung nach einem der Ansprüche 1 bis 11 ausgestattet ist.

## Claims

1. An onboard measuring device for measuring the forces developed by a cyclist on a cycle pedal (1) rotatably mounted around a pedal axle (2) fixed in a fastening hole (5) at the free end of a pedal crank (6), including force sensors (14) positioned on the pedal axle (2) and capable of detecting at least one force oriented perpendicular to the pedal axle and providing a signal depending on the detected force, and electronic means (17) receiving the signals from the sensors (14) in order to obtain displayable values, at least part of said electronic means (17) being integrated into an electronic card (23) powered by an autonomous energy source and on which a male connecting member (24) is fixed capable of passing through said fastening hole (5) of the pedal axle (2) on the crank (6) so as to cooperate with a female connecting member (25) provided in the end of the pedal axle (2) fixed on the crank (6), **characterized in that** said electronic board (23) forms, with said male connecting member (24), an easily detachable assembly and **in that** said male connecting member (24) is retained in said female connecting member (25) by electrical contact means (26) provided in said male and female connecting members (24, 25) and capable of being plugged into one another.

2. The force measuring device according to claim 1, **characterized in that** said male connecting member (24) extends perpendicular to said electronic card (23) such that said electronic board extends parallel to the crank (6) close thereto when said male connecting member (24) cooperates with said female connecting member (25).

3. The force measuring device according to any one of the preceding claims, and wherein said force sensors (14) are strain gauges, **characterized in that** the angular position of the pedal axle (2) fixed on the crank (6) can be adjusted and locked using a locknut (21) cooperating with a threading (22) provided on the pedal axle (2) bearing against the crank (6) such the two opposite surfaces (15) of the pedal axle (2) on which said strain gauges (14) are fixed extend in a plane substantially coinciding with the longitudinal axis of the crank (6).

4. The force measuring device according to any one of the preceding claims, **characterized in that** the relative angular position of said male and female connecting members (24, 25) is determined using a indexing means (27, 28) provided thereon.

5. The force measuring device according to claim 4, **characterized in that** said indexing means includes an axial slot (27) provided on the interface of said female connecting member (25) and capable of cooperating with an axial rib (28) provided on the outer face of said male connecting member (24), or vice versa.

6. The force measuring device according to claim 5, **characterized in that** two indexing means (27, 28) are provided diametrically opposite so as to allow a relative rotation of said male and female connecting members (24, 25) of 180°.

7. The force measuring device according to any one of the preceding claims, **characterized in that** it also comprises a sensor of the angular speed (18) of the crank (6) comprising a first part (19) integrated into the pedal body (10) and a second part (20) integrated into the pedal axle (2), said speed sensor being capable of generating a signal depending on the detected angular speed to provide it to said signal processing means (17).

8. The force measuring device according to any one of the preceding claims, **characterized in that** said energy source is a battery integrated into the electronic card (23).

9. The force measuring device according to any one of the preceding claims, **characterized in that** said electronic card (23) also includes a transmitter capable of transmitting data regarding the measurement to a display device.

10. The force measuring device according to claim 9, **characterized in that** said display device is an onboard display device showing the developed forces to the cyclist in real-time.

11. The force measuring device according to any one of the preceding claims, **characterized in that** said electronic card (23) also includes a memory to store data obtained from signals transmitted by the sensors (14, 18).

12. A cycle equipped with a measuring device according to any one of claims 1 to 11.
